Europäisches Patentamt

(19) European Patent Office

Office européen des brevets

(11) Publication number: **0 091 415**
**A1**

## (12) EUROPEAN PATENT APPLICATION

(21) Application number: 83850088.2

(22) Date of filing: 30.03.83

(51) Int. Cl.³: **B 29 D 7/02**

(30) Priority: 02.04.82 US 364640
09.03.83 US 471664

(43) Date of publication of application:
12.10.83 Bulletin 83/41

(84) Designated Contracting States:
AT BE CH DE FR GB IT LI LU NL SE

(71) Applicant: FBK INTERNATIONAL CORPORATION
2151 Highland Avenue
Birmingham Alabama 35 205(US)

(72) Inventor: Quackenbush, John J.
1751 Patton Chapel Road
Birmingham Alabama 35 226(US)

(74) Representative: Wallin, Bo-Göran et al,
AWAPATENT AB Box 5117
S-200 71 Malmö(SE)

(54) Method and apparatus for cooling and quenching an extruded film of plastic material.

(57) An apparatus and method for rapidly quenching plastic film (F) especially tubular film is disclosed. A curtain of aerated coating liquid is gently directed onto the film (F) surface in such a way that disturbances to the film are avoided and the film is stabilized in its path of travel. Novel film flattening mechanisms (80) and film pleating means are also provided.

FIG. I

1

## METHOD AND APPARATUS FOR COOLING AND QUENCHING AN EXTRUDED FILM OF PLASTIC MATERIAL

## BACKGROUND OF THE INVENTION

This invention relates generally to improvements in the production of thin films of organic plastic material. The invention is particularly suitable for, although not limited to, the production of flattened tubular films of such materials.

The following discussion of background prior art makes particular reference to known methods for producing flattened tubular film although the invention in its broadest aspect is not limited to the production of tubular film but extends to other forms of film as well.

It is known to produce flattened tubular film from materials such as polyethylene and polypropylene by effecting continuous extrusion of a tube of molten material, the latter being distended by internal air pressure to produce the desired film thickness, the film being thereafter passed between cooperating rotatable draw rollers which flatten the distended tube.

One previously known procedure involves cooling of the film to a solid state between the extrusion die and the draw rollers by projecting a stream of gas, usually air, onto the outside surface of the semi-molten film. The air in most cases is at ambient temperatures although in some instances refrigerated air is used in an effort to quickly cool, set and maintain the geometric shape of the film and, to some limited extent, to control the physical properties of the film. Because this method provides for relatively slow cooling, the rate of extrusion must be kept relatively low and a fairly substantial distance, often in the order of 6 to 10 metres, between the die and the draw rollers is necessary in order to provide sufficient cooling while at the same time achieving a reasonable speed. Hence the equipment involved is exceedingly bulky and costly and moreover the slow cooling of certain types of film results in poor clarity, poor gloss and loss of certain desirable mechanical properties.

In the case of tubular film efforts were made to alleviate the above problems by immersing the draw rollers in a bath of water so that the film could be rapidly cooled externally before being flattened and reeled. The disadvantage with this is that the tube sometimes tends to collapse prematurely under the pressure of the external cooling water with very undesirable results. Another prior art process used with tubular film is to provide an internally cooled cylinder or mandrel over which the film is drawn, rapid cooling being accomplished by an external water bath adjacent the cylinder with the film being drawn between the cylinder and an annular flexible diaphragm forming the base of the water bath. The substantial frictional forces involved, however, result in considerable film orientation in the axial direction thus giving rise to certain undesirable mechanical properties.

A still further prior art process involves passing the extruded tubular film downwardly through and in close proximity to a tubular passageway which is bathed by a downwardly flowing cooling liquid which contacts the whole of the external surface of the tubular film as it passes through the passageway. There are a number of difficulties with this process in that the tube must be inflated to virtually the exact size required for the tubular passageway before even cooling of the tube can take place. Moreover, a large number of accurately sized tubular passageways must be kept on hand to allow for the production of different diameters or widths of tubing. A further disadvantage is that

3

the maximum speed of production is limited in that the thin film of liquid between the film and the passageway will boil if production speeds are excessive thus marking the surface of the tubular film.

A still further prior art method for producing flattened tubular film involves continuously extruding the molten material in a vertically downward direction while passing the tube between draw rollers and maintaining in the tube a volume of gas such that the degree of inflation and rate of withdrawal bring about a predetermined reduction in the thickness of the tube. The method involves solidifying the inflated tube by directing the curtain of cooling liquid toward the tube in the vicinity of the position of initial inflation of same in a manner such that the liquid impinges against the tube and runs down the inflated tube toward the draw rollers.

In the last mentioned prior art procedure the cooling apparatus includes an annular housing positioned adjacent the extrusion die and surrounding the path of travel of the tube, such housing being provided with a slit-like orifice arranged to cause a curtain of the liquid to be initially directed toward the tube and desirably at an angle to the axis of the tube.

Although the above noted proposal would, in theory, appear to alleviate the difficulties associated with the other prior art proposals, the latter proposal involving directing a curtain of cooling liquid directly onto the surface of the semi-molten film did not meet significant commercial success. The subsequent history of the development of the art indicates that continued use was made of various types of internally positioned cooling mandrels, supports, stabilizers and like devices to overcome problems of tube collapse, and to withstand the impact or velocity forces associated with exterior application of the coolant and/or to assist in cooling the interior tubular surface simultaneously with the

4

exterior cooling. Furthermore, experimental work carried out with a view to duplicating the results of the above-noted process involving directing an annular curtain of cooling liquid to the tube exterior were unsuccessful owing mainly to a tendency for the tube to develop instability, the result being that the tube tended to collapse occasionally or alternatively to develop undesirable surface properties owing to unwanted deviations of such film from the intended path of travel.

## SUMMARY OF THE INVENTION

It is a general object of the invention to provide a method and apparatus for rapidly quenching or cooling semi-molten thermoplastic or thermosetting film materials shortly after they have been extruded while at the same time alleviating the problems encountered in the various prior art processes such as have been set forth above. As a result, the operation of the invention can therefore provide savings in the equipment costs, production costs, energy costs and other related processing costs.

Apparatus for quenching an extruded semi-molten film of plastic material in accordance with one aspect of the invention includes means defining a path of travel for the film and cooling means having a means to supply a flow of cooling liquid. In accordance with the invention wall means is arranged adjacent to but spaced from the path of travel of the film for receiving the flow of cooling liquid such that a sheet of the cooling liquid flows freely downwardly over the wall means in exposed, facing and spaced relationship to the semi-molten film. The wall means is inclined to the path of travel of the film such that the cooling liquid, after leaving such wall means, forms a curtain which tends to follow the same inclined course as before and hence converges toward the moving film and gently makes contact with same at a region spaced along the path of travel from the wall means.

5

In accordance with a particularly notable feature of the invention the angle of incline of the wall means to the path of travel of the film is such that, in operation, a small negative pressure is created between such wall means and the film which helps to position and stabilize the film in its path of travel.

In a further significant aspect of the invention the apparatus described above is adapted for use with die means for extruding a semi-molten tubular film of a selected diameter wherein air under pressure is supplied to the interior of the tubular film to assist in maintaining the selected diameter of same. The above noted cooling means is particularly characterized in that the wall means is ring-shaped and includes a generally conical interior wall and means for distributing the cooling liquid around the interior wall such that, in operation, the sheet of downwardly flowing liquid extends completely around the tubular film and, after leaving the said wall means, forms the above noted curtain which converges toward and meets the film at said selected region which is spaced along the path of travel from the wall means by a distance which is inversely related to the selected diameter of the tubular film. The cooling liquid after meeting the film surface flows downwardly over such film surface and rapidly quenches the same.

By virtue of the inclined flow of cooling liquid over the wall means in close proximity to the film, as described above, the above noted pressure differential is created, which thus positions and stabilizes the film in its path of travel without the need for various types of mechanical supports, stabilizers and cooling mandrels as were required by the prior art procedures.

A further significant aspect of the invention provides means for aerating the cooling liquid before it meets the surface of the film. By aerating the film numerous advantages arise which will be dealt with in more detail later on.

A method of extruding and quenching semi-molten plastic film in accordance with a further aspect of the invention involves extruding a semi-molten plastic film and passing the film along the path of travel. The method includes directing a cooling liquid such that it flows freely downwardly along a wall spaced from and inclined at an acute angle to the path of travel such that a curtain of the cooling liquid after leaving the wall tends to follow the same inclined course and thus converges toward the moving film and gently makes contact with it at a region spaced along the path of travel from the wall. As a further feature of the invention the curtain of cooling liquid converges toward the film at an angle such that a slight negative pressure appears between the wall and the film, which negative pressure assists in stabilizing the film.

The method aspect of the invention, as with the apparatus aspect, is particularly applicable in the case where tubular film is being formed, and in such case the flow of cooling liquid is directed along and around a conically shaped wall surface to entirely surround the tubular film with the flow of cooling liquid after leaving the wall forming a curtain, which curtain completely surrounds the tubular film and converges inwardly toward it, the above noted negative pressure between the wall and the film, as noted above, serving to stabilize the tubular film without the need of mechanical stabilizing devices etc.

As a further feature of the method aspect of the invention, the cooling liquid is aerated shortly before it is directed toward and onto the semi-molten film.

As a separate aspect of the invention there is provided an apparatus for cooling and quenching a semi-molten film of plastics material which has been extruded from an extrusion die and which is moving along the path of travel, such apparatus including cooling means for the molten film which employs means for supplying the flow of cooling liquid. This apparatus is particularly characterised by means for aerating the cooling liquid and means for bringing the aerated liquid into contact with the surface of the film to quench the same.

The numerous advantages associated with the use of aerated coolant will be outlined in some detail in the description of preferred embodiments which follows.

In one aspect, the aerated liquid is brought into contact with the film surface by means for directing a uniform curtain of the aerated liquid onto such film surface.

In a further aspect, the above noted aerating means includes a porous member to which pressurized air is supplied, the porous member being arranged such that the cooling liquid passes thereover and is aerated prior to being directed onto the surface of the film.

Preferably, the means for directing the uniform curtain of aerated liquid is adapted to cause such liquid to converge toward the film at an acute angle.

Apparatus as described above is particularly suitable for quenching tubular film passing downwardly along the vertical path of travel wherein the means for directing the curtain of liquid includes a conical wall which in use surrounds the path of travel and directs the curtain of aerated liquid downwardly and radially inwardly against the film around the entire surface thereof to effect rapid quenching of same.

In a still further aspect of the invention there is provided a method for quenching the semi-molten film of thermoplastic film including the steps of extruding such film from an extrusion die and passing same along a path of travel, supplying a flow of cooling liquid to contact and cool such film, characterised by the steps of aerating the cooling liquid and bringing the aerated liquid into contact with a surface of the film

8

to quench the same.

The aerated liquid is preferably applied as a uniform curtain to the film surface.

Further method and apparatus aspects of the invention will be set forth in the claims appearing hereafter.

The present invention involves numerous additional features and combinations of features. With reference to an apparatus aspect of the invention a basin is provided for receiving the cooling liquid after it has left the surface of the film. A reservoir tank is connected to said basin to receive and store the cooling liquid and a pump for recirculating cooling liquid to the cooling means from the reservoir tank is provided whereby the cooling liquid is effectively circulated in a closed loop. Preferably, temperature control means in the reservoir tank are provided to assist in keeping the cooling liquid at a predetermined temperature.

The apparatus described above for producing a tubular film includes the usual driven rolls or draw rolls spaced below the ring-shaped wall means and between which the extruded tubular film passes. A pair of plates are located on opposite sides of the path of travel between the roll means and the wall means and these plates converge toward each other in such a way as to help flatten the tubular film prior to entry thereof between the rolls. As a further feature of the invention there is provided novel first adjustment means to vary the angle between the plates and novel second adjustment means to vary the minimum distance between such plates which exists adjacent the driven roll means. These first and second adjustment means will be described and claimed in further detail hereafter.

In a still further aspect of the invention, and in conjunction with the apparatus for forming tubular film, there is provided improved means for forming oppositely arranged gussets in the tubular film as

9

it is being flattened and prior to entry between the roll means. Preferably such gusset forming means includes freely rotating gusset forming wheels located so as to be engaged tangentially and rotated by the film as it moves along the path of travel, such wheels forming the inwardly directed gusset defining creases in the film. Novel support means for the wheels are provided which are adjustable to vary the locations of the wheels thereby to accommodate a variety of tubing sizes and a variety of sizes of gussets.

Further features of the invention will be set forth in more detail hereinafter and are particularly pointed out in the appended claims.

BRIEF DESCRIPTION OF THE VIEWS OF DRAWINGS

In drawings which illustrate a preferred embodiment of the invention:

Fig. 1 is an overall perspective view of a quenching apparatus in accordance with the invention;

Fig. 2 is a side elevation view thereof;

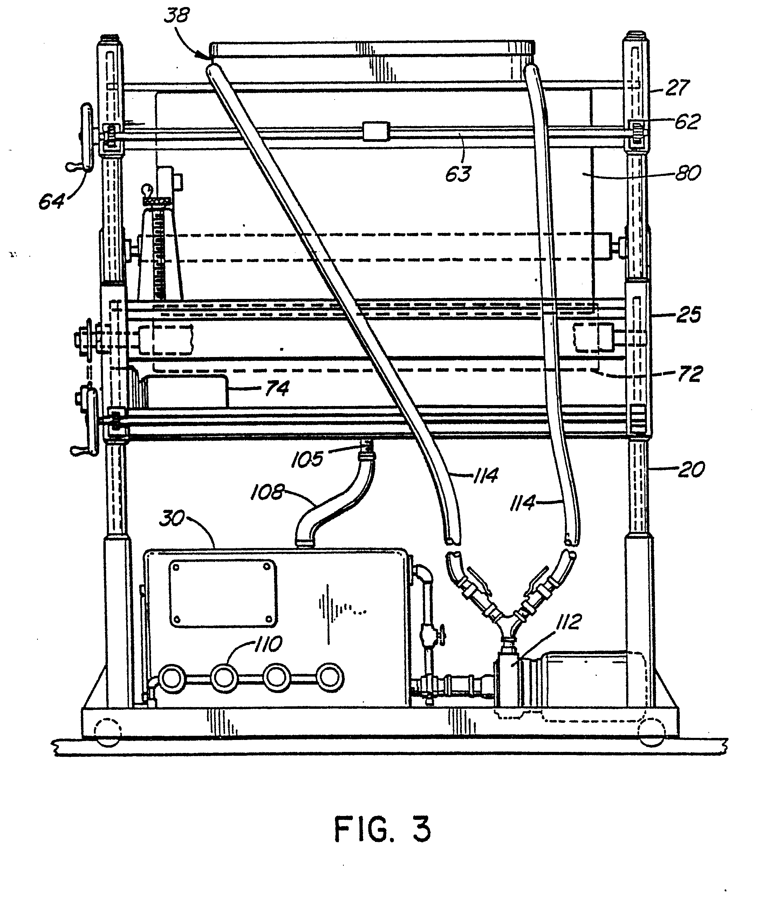

Fig. 3 is a rear elevation view thereof;

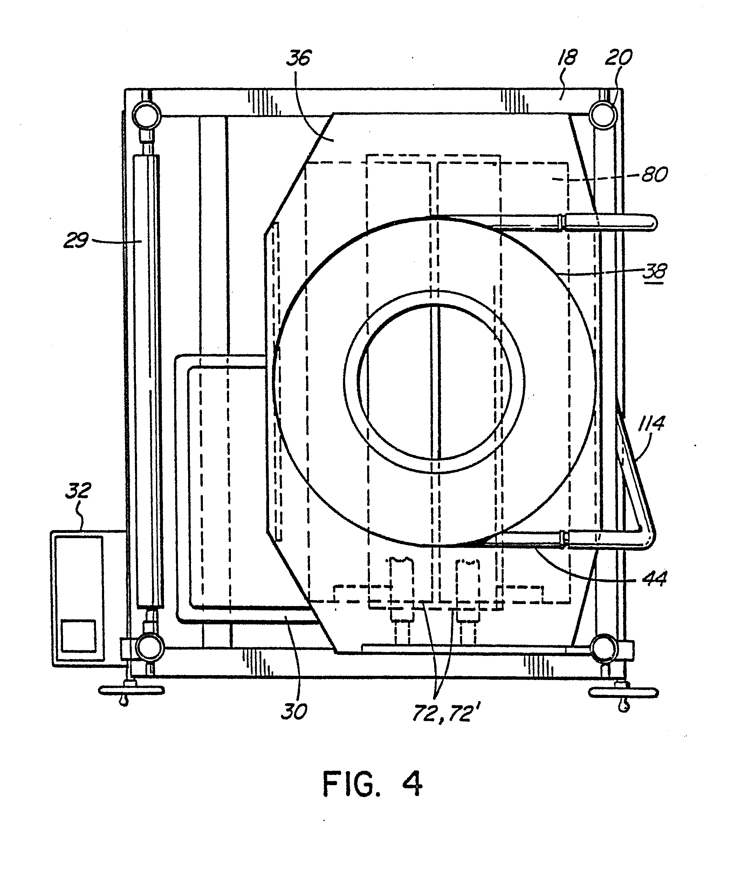

Fig. 4 is a plan thereof;

Fig. 5 is a plan view of the quenching head per se;

Fig. 6 is a partial sectional view taken along lines 6-6 of Fig. 5;

Fig. 7 is a diagrammatic side elevation view of the quenching head showing the lines of contact of the cooling liquid with the tubular film, for different tube diameters;

Fig. 8 is a side elevation view of the transition plates and their associated adjustment means as well as the nip rollers;

Fig. 9 is a top plan view of the transition plates, their adjustment means and the nip rolls as they would appear without the quenching head and its support mechanisms in place;

Fig. 10 is a front elevation view of the pivot

10

support and horizontal adjusting mechanism for the transition plates;

Fig. 11 is a side elevation view of the structure shown in Fig. 10;

Fig. 12 is a perspective view illustrating the vertical support and adjustment mechanism for the quenching head;

Fig. 13 is a front elevation view of a portion of the quenching apparatus illustrating the gusseting and folding apparatus for the tubular film and its position relative to the fluid quenching head;

Fig. 14 is a plan view of a pair of gusset forming wheels and support assemblies therefor engaged with a tubular film.

DESCRIPTION OF THE PREFERRED EMBODIMENT

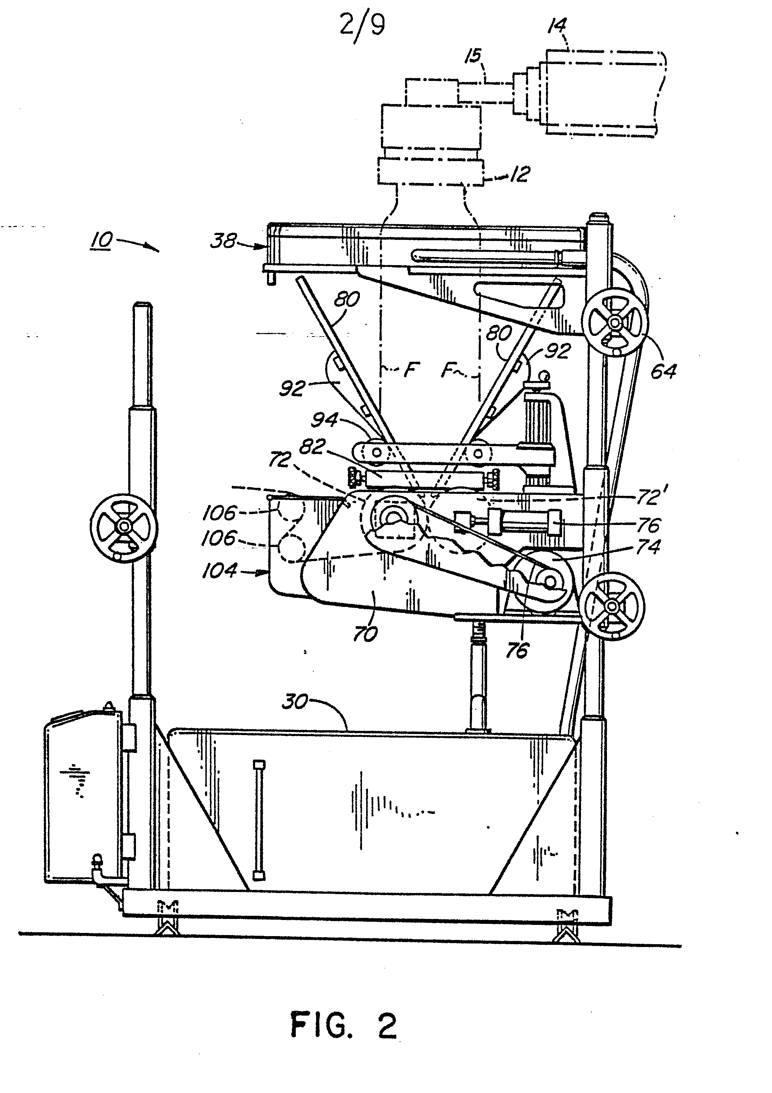

Referring now to the drawing there is shown a quenching apparatus 10 according to the invention located below an extrusion die 12. The die 12 is capable of extruding a tubular film of molten plastic material and such die may be of any conventional design, preferably a design wherein the die gauge control adjustments are located in the body of the die. The die 12 is connected to and rigidly supported from a conventional extruder 14 by way of a suspension manifold 15 (see Fig. 2). The extruder 14 is of any conventional size (1'' to 6'' - 24:1 or 30:1) (about 2.5 - 15 cm) with an operating pressure range of 2,000 to 10,000 pounds per square inch (approx. 13.8 - 68.95 MPa). The extruder will be capable of handling a wide variety of plastics including polyethylenes, polypropylenes, Nylons, Ionomers, EVA co-polymers etc. as described in further detail hereafter. The extrusion die will be connected to a source of regulated air pressure (not shown) so that the tubular film can be inflated and brought out to the desired diameter in a manner well known in the art.

The quenching apparatus 10 includes a support frame

11

16 including a rectangular base 18 having rigid steel
support posts 20 extending upwardly in parallelism
to each other from each of the four corners of base
18 and rigidly connected to the base. The base 18 is
provided with four support wheels 22 adapted to move
along parallel tracks 24 thereby to allow the quenching
apparatus 10 to be moved along the tracks 24 from the
position shown beneath the die 12 to a position removed
therefrom for maintenance purposes.

Frame 16 serves to support a quench head assembly
26, the latter being located above a web flattening
and drawing assembly 28. Both of these assemblies are
independently adjustable upwardly and downwardly along
the associated support posts 20. Located below assembly
28 on the base 18 is a reservoir tank 30 for holding
a supply of cooling liquid e.g. water. Flexible tubes
connect the tank 30 with assembly 28 and quench head
assembly 26. A control panel 32 is also mounted to
the frame 16 and supports such switches, rheostats
and indicators as are necessary.

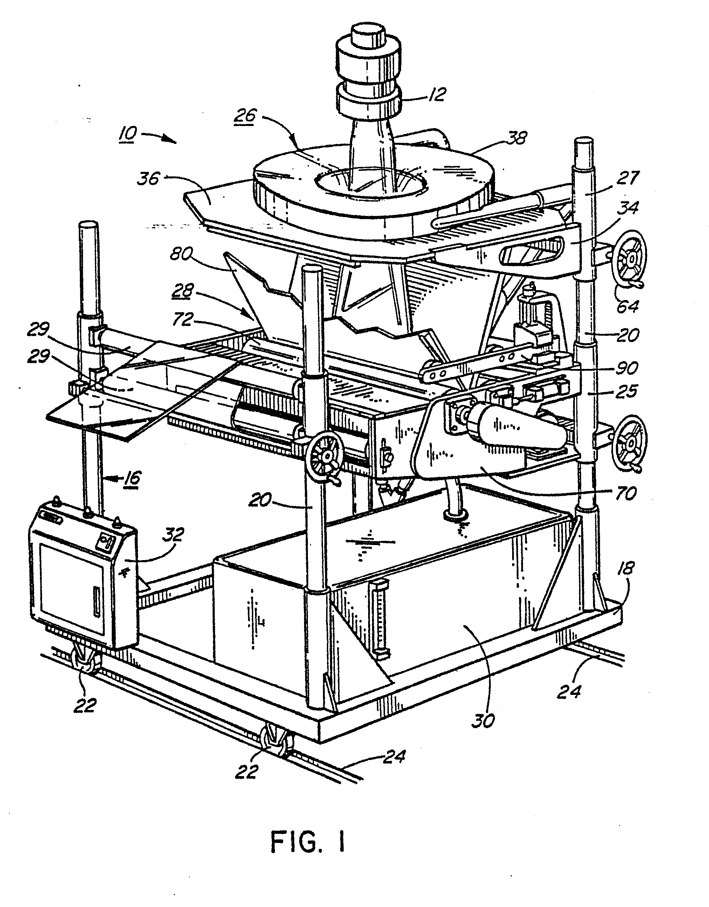

As seen in Fig. 1 and 2 the quenching apparatus
10 is located below the extrusion die such that the
tubular film can pass straight down along a vertical
path of travel defined by quenching head assembly 21
and the web flattening and drawing assembly 28. The
tubular film is rapidly quenched by the assembly 26
and thereafter collapsed into a flat tube and brought
outwardly of apparatus 10 in a lay-flat condition from
the flattening and drawing assembly 28 via various
rollers including output guide rolls 29 journalled
in vertically adjustable supports mounted on a pair
of the support posts 20.

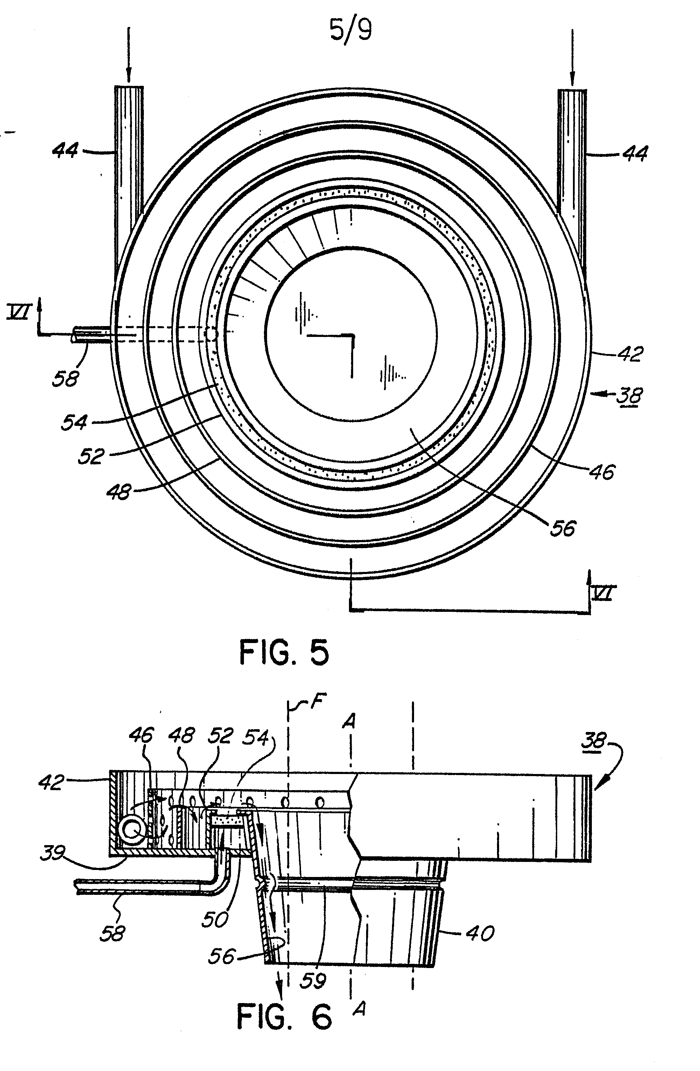

The quenching head assembly 26 is supported on
two of the posts 20 by way of a cantilever type frame,
the latter including sleeves 27 which slidably embrace
posts 20 with support members 34 secured to sleeves
27 and projecting at right angles to the posts and having a horizontal plate 36 secured thereto. This plate serves to support the quenching head 38 per se, the latter being seen clearly in Fig. 5 and 6.

Quenching head 38 is of generally circular outline and includes a flat base 39 having a central opening which receives a ring-like truncated conical member 40, the latter being symmetrical about a vertical axis A-A. Quenching head 38 includes a series of concentric walls including an outer wall 42 to which is connected a pair of tangentially arranged inlet pipes 44 through which cooling liquid is admitted to the quenching head. Radially inwardly of wall 42 is a perforated wall 46 through which the cooling liquid passes thereby to remove foreign particles from it and to reduce turbulence arising from the inflow of liquid through the inlet pipes 44. A still further wall 48 serves as a weir over which the cooling liquid flows.

An annular air chamber 50 is defined by a still further annular wall 52, base 39, the upper part of conical member 40 and an annular top element 54 made of a porous ceramic (commonly known as "airstone") capably of passing finely dispersed stream of air therethrough. In operation, owing to the respective heights of the walls described above, the incoming cooling water passes through the perforated wall 46, flows over wall 48 (thus assisting in smoothing and regulating the flow) and thence over the ceramic element 54 before passing downwardly over the conical interior wall 56 of member 40. An air supply pipe 58 provides pressurized air from a source (not shown) to the annular air chamber 50, and, as the cooling liquid passes over the porous element 54, the cooling liquid is aerated by the small air bubbles which become entrained therein just before it begins to flow downwardly over the interior wall 56.

As the aerated liquid moves downwardly over the interior wall 56 it encounters an annular protrusion 59

13

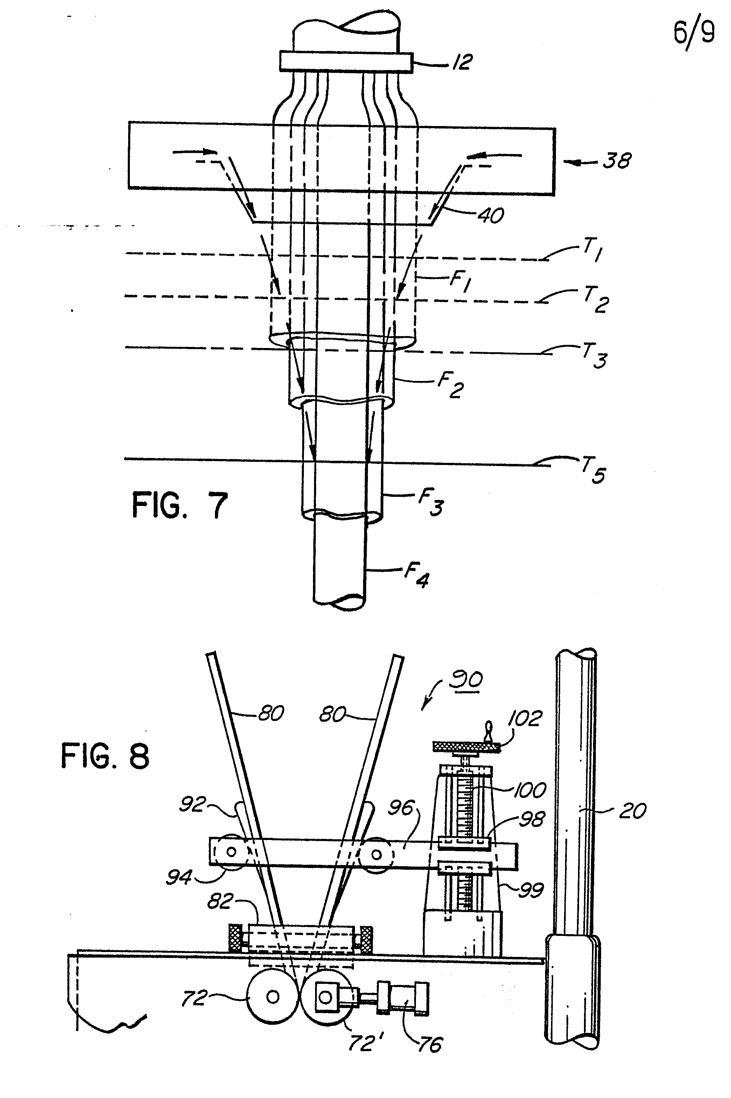

of a semi-circular cross section which is located intermediate the upper and lower edges of member 40. The annular protrusion 58 extends completely around the interior wall 56 and its function is to assist in distributing the cooling liquid uniformly around interior wall 56. The quenching head 38 is provided with levelling screws (not shown) which, when adjusted properly, ensure that the flow passing over the upper edge of member 40 is fairly uniform all around such upper edge. The annular protrusion 58 complements this flow distribution function and ensures that a uniform annular sheet of the coolant flows freely downwardly over the interior wall 56 toward the lower edge of same in exposed, spaced, facing and surrounding relationship to the surface of the tubular semi-molten film F. Owing to the angle of incline of the conical interior wall 56, the cooling liquid tends to follow the same inclined course as before and hence converges toward the film as a curtain completely surrounding the film and gently makes contact with it at a region spaced along the path of travel of the film from the lower edge of the conical member 40. This action is illustrated in Fig. 7 in somewhat diagrammatic form. A series of tubular films $F_1$, $F_2$, $F_3$ etc. are shown representing differing sizes of tubular film that can be quenched using the same quenching head 38. The planes or lines of initial contact of the cooling liquid with the film are shown as $T_1$, $T_2$, $T_3$ etc., it being noted that the distance along the path of web travel from the member 40 to the line of contact increases as the diameter of the tubular film decreases, the reason for which being apparent from the drawing.

It has been observed that, in operation, a small negative pressure exists between the inclined interior wall 56 and the tubular film and this small negative pressure helps to stabilize the air filled tubular film, e.g. prevent fluttering, as it moves along its path of travel. The exact reason for this action is not known but it may be that a venturi effect is being created by the action of the coolant as it flows freely down the conical interior wall 56 while gradually converging toward the film surface. The angle of incline i.e. the angle between any generatrix of the conical surface and the axis of the conical interior wall 56 (along which axis the tubular film travels) is not particularly critical and it may vary fairly widely e.g. between $15^{\circ}$ and $30^{\circ}$ so long as conditions are such that there is fairly gentle shallow angle contact between the coolant and the film.

The film is rapidly quenched by the downwardly flowing cooling liquid with the result being that the physical properties of the film in both the machine (flow) direction and the transverse direction are in better balance since the rapid quenching causes the film to be more amorphous thus reducing the degree of machine direction stretching vs. transverse direction stretching.

The horizontal line or plane of quench (generally referred to as the "glass transition line") should be even, unbroken and lie in a plane normal to the path of travel of the film in order to ensure an even rate of cooling and to ensure an even rate of draw of the film from the extruder die 12. The quenching apparatus herein described provides these desirable attributes.

The use of aerated cooling liquid gives rise to a number of significant advantages. Although the overall process will work at greatly reduced efficiency without aeration, particularly when effected in close proximity to the region of downward flow of the cooling liquid along the conical interior wall 56, is very desirable for at least the following reasons:

(a) the introduction of a plethora of small gas bubbles into the cooling liquid closely adjacent the region where downward flow along interior wall 56 commences

15

provides a smooth, even and consistent flow;

(b)     aeration of the coolant serves to "cushion" the impact of the coolant with the film at the line of contact T noted above thus reducing the chance of film rupture, collapse or surface marking;

(c)     aeration also has a beneficial effect on heat transfer rates. Heat is removed from the semi-molten plastic as it is brought into contact with the liquid and thus heat is convected from the plastic to the coolant resulting in the production of steam as well as a rise in coolant temperature. Because the differential in temperature between the semi-molten plastic and the coolant is in excess of $65^{\circ}C$ ($150^{\circ}F$) and since the temperature differential may vary widely, the heat transfer coefficients K are not constant. In general, the heat transfer is in the steady state since the plastic to be cooled is at a fixed temperature and constant linear speed of travel and the liquid coolant can be at a controlled temperature. It appears that introducing air to the coolant tends to assist in stabilizing its temperature and in increasing its convective capacity.

(d)     another feature of aeration is that it reduces coolant over-splash and coolant carryover on the film product. Since one objective of the invention is to reduce the distance the film must travel before it is cooled, it is necessary to use large volumes of coolant e.g. about 130 - 150 liters/minute (about 35 - 40 U.S. gallons/minute). These large coolant volumes cascade downwardly along the exterior surface of the film and must thence be carried by gravity away from the resulting flat-tubing product as rapidly as possible to avoid undesirable amounts of coolant being carried away from the quenching apparatus. Aerated coolants serve to reduce splashing and liquid carryover on the

16

film surfaces to an acceptable level.

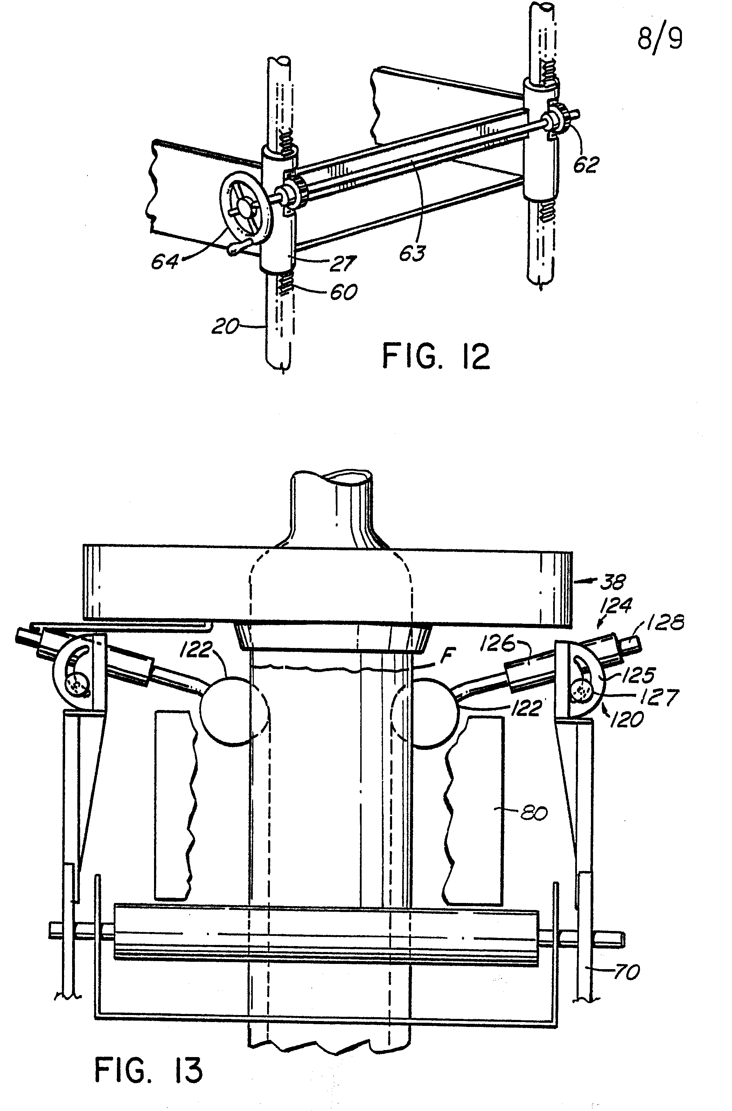

Reference was made previously to the web flattening and drawing assembly 28 which is located below the quench lead assembly and which is adjustable upwardly and downwardly along a pair of the support posts 20. The vertical adjustment means is essentially the same for both assembly 26 and assembly 28 and is illustrated in Fig. 12. It will be noted that two of the posts 20 are each provided with a rack gear 60, the latter being engaged by pinions 62 rotatably journalled on sleeves 26 wich are slidably supported on the posts 20. Pinions 62 are also rigidly secured to shaft 63 one end of which is provided with a handwheel 64. Rotation of the handwheel causes sleeves 27 to move along posts 20. In the case of the quenching head assembly 26, the previously described cantilever type frame is connect to sleeves 27 for movement therewith. The flattening and drawing assembly 28 is similarly secured to an associated set of sleeves 25, each provided with pinions which are rotated by way of a handwheel and shaft assembly as described above to effect vertical travel of the assembly 28. Suitable means such as a friction brake or locking device (not shown) prevent unwanted rotation of the handwheels and hence prevent unwanted vertical travel of the two assemblies 26 and 28.

Assembly 28 is supported in cantilever fashion from its associated sleeves 25 and includes a pair of spaced parallel support plates 70, which plates serve to support via suitable bearings a pair of horizontally disposed nip rollers 72, 72', one of which has a steel surface while the other has a surface of synthetic rubber. One of these rolls 72 is driven via variable speed drive motor 74 and drive belt 76 while the other roll 72' is movable toward and away from the associated roll 70 under the influence of pneumatic cylinders 76 connected to the bearing blocks for roll 72', such

17

bearing blocks being slidably mounted in the support plates 70.

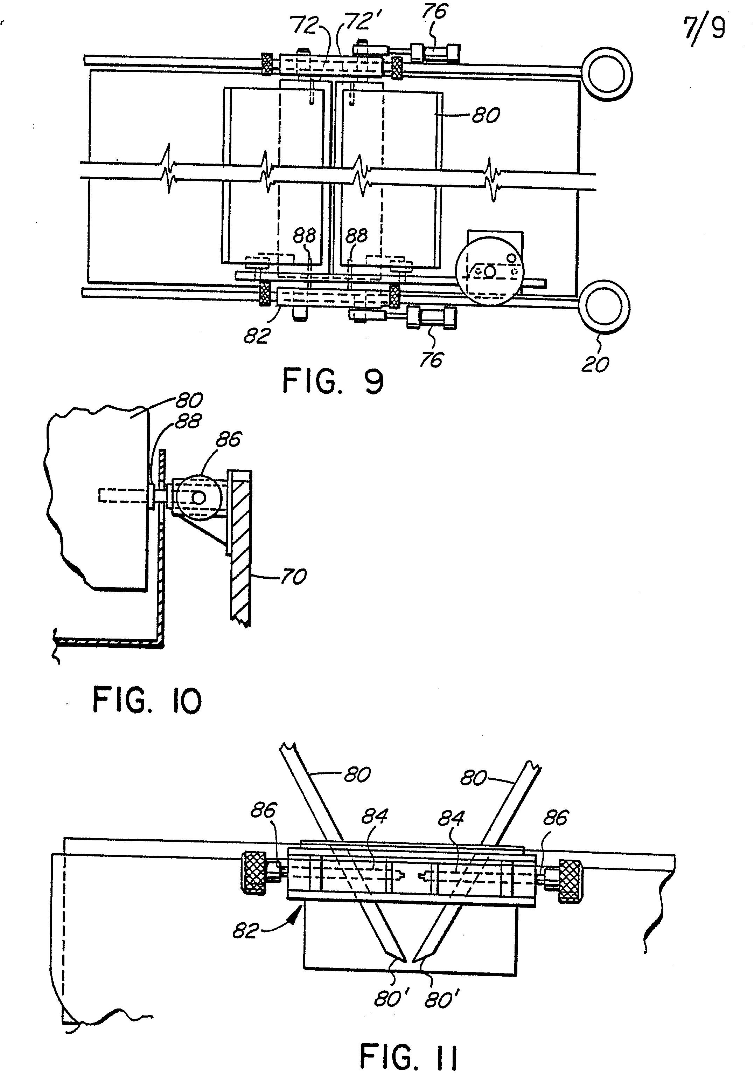

Located above the nip rollers 72, 72' are the transition plates 80, such plates being generally flat and converging toward each other in the downward direction to provided a generally V-shaped guide which receives the tubular film F shortly after it has been quenched and which guides and flattens the film F and feeds it between the nip rolls 72, 72'. The surfaces of plates 80 are anodized or coated with polytetrafluoroethylene ("Teflon®") to prevent sticking of same to the film. Plates 80 are pivotally supported adjacent their lower extremities via adjustable plate supports 82 located to both sides of the plates 80. These supports are shown in Figs. 9-11. Each such support includes a pair of travelling slide blocks 84 movable toward and away from one another via thumbwheels connected to respective threaded adjustment screws 86. Each slide block has a pivot pin 88 therein which serves to pivotally mount an associated one of the plates 80. Hence, as the thumbwheels are rotated, the gap or distance between the lower edges 80' of the plates 80 can be varied as desired and, moreover, the horizontal location of the gap between such lower edges 80' can be varied to bring the same into proper alignment with the nip between the rolls 72, 72'.

The angle between transition plates 80 is adjustable by way of a further mechanism 90 (Figs. 1, 2 & 8). The plates 80 are each provided adjacent their side edges with cam members 92 each engaged by a respective roller 94 connected to a vertically adjustable roller carrier 96. Carrier 96 is rigidly secured to a block 98 slidably mounted to support 99 and through which a vertical adjustment screw 100 passes. As screw 100 is rotated by handwheel 102, the carrier 96 moves upwardly or downwardly with the rollers 94 moving along their associated cams 92 and thus varying the included angle between the transition plates 80 by the amount desired. The above described adjustment means for plates 80 allow for a wide variety of sizes of films to be produced and enable adjustment to be quickly made during start up and continual operation.

Positioned between and supported by the main support plates 70 is a basin 104 which serves to receive the liquid coolant after it has flowed downwardly over the surface of the tubular film. The basin 104 is generally rectangular in plan view and the two nip rolls are located within it together with a further pair of idler rolls 106 over which the flattened film F passes before it exits the basin.

The basin 104 is provided with a bottom drain outlet 105 and this is connected via a flexible hose 108 to the coolant reservoir tank 30, the latter being supported on the base 18 of the support frame. Tank 30 is equipped with an electric heating element 110 and a thermostat thereby to bring the coolant up to the desired temperature (usually about 88°C (190°F) as at start-up. The temperature of the coolant may be further controlled by cooling coils (not drawn) within tank 30 which circulate chilled water from a source under the control of a thermostatically controlled valve (not shown). A float controlled valve (not shown) may also be used to admit fresh water from a source to keep the level in tank 30 up to the level desired and/or to assist in maintaining the temperature at the desired value. A motor driven pump 112 receives the coolant from tank 30 and supplies it at the desired rate, eg. 30-40 U.S. gallons/minute (about 110-150 l/min) to the quenching head 38 via a pair of flexible hoses 114 which are connected to the aforementioned inlet pipes 44 on the quenching head. Since the coolant escaping from the flexible film and the nip rolls is mainly caught by the basin 104 and returned to tank 30, it will be seen that the coolant travels in what is essentially a closed loop.

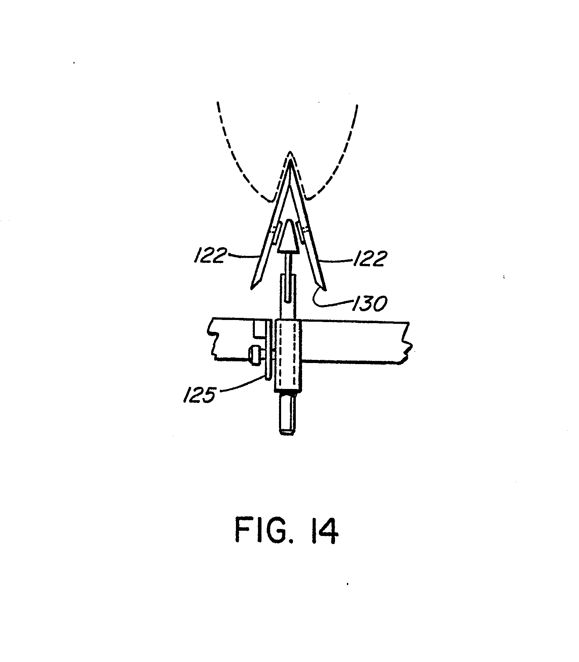

In many instances, especially when large diameter tubular film is being extruded, it is desirable that diametrically opposed gussets be formed in the tubing before it is flattened thereby to reduce the width of the films in the lay-flat condition. A tube gusseting apparatus 120 is shown in Figs. 13 and 14, this apparatus includes opposed pairs of gusset forming wheels 122 adapted to contact the tubular film at diametrically opposed locations and to fold it inwardly as illustrated in Fig. 14. Each pair of forming wheels is mounted on a support bracket 124, the latter including a protractor plate 125 and pivot mount for a block 126 within which the forming wheel support arm 128 is locked. The block and support arm can be angularly adjusted in a vertical plane and locked at the desired angle by tightening thumbscrew 127. A set screw (not shown) locks the arm 128 in block 126 at the desired location. Hence, by the means described above, the gusset forming wheel 122 can be positioned upwardly or downwardly, inwardly or outwardly, and locked in virtually the desired location so as to obtain the desired gusseting and folding effect. In certain intances only a single gusset may be desired and in this event one set of forming wheels 122 is either retracted away from the film or removed altogether.

With further reference to Fig. 14 it will be seen that the wheels 122 are each bevelled adjacent their outer peripheries 130 and that the axes of rotation of the pair of wheels are inclined such that the bevelled peripheral portions 130 come into close juxtaposition with each other at the point of tangential contact with the film. This particular arrangement has been found to be very beneficial in relation to the formation of a well defined pleat or gusset in the film which is free from wrinkles. Further, the wheels 122 are mounted on free running ball or roller bearings so that they rotate freely on contact with the moving film thus avoiding tearing or undue streching of the film.

It is believed that the operation of the quenching apparatus will be self-evident from the above. However, a few comments will be made. Initially, the quenching apparatus is moved away from the quenching head and the tubular extrudate is allowed to flow until the extrudate is free of streaks etc. The apparatus is then moved into place and the pump 112 is started to deliver the aerated cooling liquid to the quenching head 38. At this point the nip roll 72' is retracted and the nip roll drive motor 74 is adjusted to rotate the nip rolls slowly. The transition plates 80 are also spaced well apart at their bottom edges 80' to allow the extruded film to pass through and between the nip rolls, the film being thereafter threaded through the take off idler rolls 106 and 29. Since the coolant is flowing at this time, the transition plates 80 etc. are well wetted with coolant thus in combination with the coating on plates 80 preventing sticking of the plastic to the metal surfaces. Nip roll 72' is then advanced to close the nip. The tubing is then inflated to cause it to come to nearly the correct diameter and the transition plates are adjusted. The nip roll drive motor is then increased in speed thus slowly increasing the draw rate to stretch the film in the machine direction and, in combination with the lateral stretching, bring it down to the required thickness. When conditions have stabilized the tube inflation is re-checked to ensure that the correct lay-flat width has been obtained and the quality of the resulting film is checked to ensure that the film is free of wrinkles, blemishes and lines.

## EXAMPLE

In one production run, linear low-density polyethylene was extruded from an 203 mm (8") blown-film extrusion die, having a die orifice opening of 0.635 mm (0.025"). Extruder temperatures were profiled as followed:

Zone 1 - Feed 310°F (154°C)
Zone 2 - Transition 350°F (176°C)
Zone 3 - Compression 410°F (210°C)
Zone 4 - Gate/Adaptor 465°F (240°C)
Zone 5 - Manifold 475°F (246°C)
Zone 6 - Die 475°F (246°C)

A tube was formed having a diameter of approximately 10 inches (25.5 cm) and this was drawn down through the centre of the quenching head 28 and between the slowly rotating (approx. 5 feet per minute) (about 1.5 m/min) nip rollers 72, 72'. The web was then fed over and under the downsteam idler rollers 106, through an in-line bag machine and onto a dual-spindle winder.

With the aerated cooling liquid flowing onto the tubular extrudate, as described previously at a rate of about 35 U.S. gallons/minute (132.5 l/min), the extruded tubing was inflated to provide a web lay-flat width of 15 inches (38 cm) and nip roll haul-off rates were gradually increased to achieve a tubing wall thickness of three mils (0.003 inches) (about 0.075 mm).

The line speed was gradually increased to 180 feet per minute (58.9 m/min) and the extrusion rate was in excess of 150 pounds/hour (68 kg/h). Cooling liquid temperatures were initially at 160°F (71°C) and were elevated to approximately 170°F (77°C) for the duration of the run. Under the above conditions it was observed that the horizontal line of quench or "glass transition line" was located some 18 inches (45 cm) below the lower edge of the conical member 40 (the latter having a vertical dimension of 8 inches (20.3 cm)).

The resulting film appearance, gloss and clarity were equal to or exceeded commercially acceptable standards of the industry and the resulting tubing product was free of noticeable surface imperfections.

22

CLAIMS

1. Apparatus for quenching an extruded semi-molten film (F) of plastic material including: means (80, 72, 72') defining a path of travel for the film; cooling means (21) having means (26) to supply a flow of cooling liquid c h a - r a c t e r i s e d by a wall means (40) arranged adjacent to but spaced from the path of travel of the film for receiving the flow of cooling liquid such that a sheet of such liquid flows freely downwardly over said wall means (40) in exposed, facing, and spaced relationship to the semi-molten film (F), said wall means (40) being inclined to the path of travel such that the cooling liquid after leaving such wall means (40) forms a curtain which tends to follow the same inclined course and converges toward the moving film (F) and gently makes contact therewith at a selected region spaced along the path travel from said wall means (40).

2. Apparatus according to claim 1 wherein the angle of incline of said wall menas (40) to the path of travel is such that in operation, a small negative pressure is created between the wall means (40) and the film (F) which helps to position and stabilize the film in its path of travel.

3. Apparatus according to claim 1 or 2 further c h a r a c t e r i s e d in that said cooling means (21) includes means (50) for aerating the cooling liquid before it contacts said semi-molten film (F).

4. Apparatus according to claim 1, 2 or 3 adapted for use with means for extruding a semi-molten tubular film (F) of a selected diameter lying within a predetermined range, wherein air under pressure is supplied to the interior of the tubular film to assist in maintaining the selected diameter thereof, said cooling means (21) being further c h a r a c t e r i s e d in that said wall means (40) is ring-shaped and has a generally conical interior wall (56) and means (42, 46, 48, 50) for distributing the cooling liquid around said interior wall such that, in operation, the sheet of downwardly flowing liquid extends completely around the tubular film (F), and after leaving said wall means (40) forms said curtain which converges toward and meets the film at said acute angle at said selected region (T) which is spaced along the path of travel from said wall means (40) by a distance which is inversely related to the selected diameter of the tubular film, the cooling liquid thereafter flowing downwardly over the surface of the film to rapidly quench the same.

5. Apparatus according to claim 4 wherein the means (38) for distributing the cooling liquid around said interior wall (56) includes an annular protrusion (59) on said interior wall (56) and extending completely therearound.

6. Apparatus according to claim 3, 4 or 5 wherein said means (50) for aerating the cooling liquid includes a porous member (54) located such that the cooling liquid flows thereover in operation, and means (58) for supplying gas to said porous member (54) such that in operation the gas bubbles through the cooling liquid passing thereover to aerate same.

7. Apparatus according to any of claims 1-6 including means (80) for flattening the tubular film and roll means (72, 72') for drawing the flattened film therebetween at a selected speed, said roll means assisting in defining said path of travel.

8. Apparatus according to any of claims 4-7 including means (120) for forming at least one gusset in the tubular film (F) as it is being flattened and prior to entry between said roll means (72, 72').

9. Apparatus for quenching an extruded semi-molten tubular film (F) of plastic material optionally according to any of claims 1-8 including:

a quenching head (38) for supplying a flow of coolant against the film surface to cool and quench the same,

a pair of nip rolls (72, 72') below and spaced from said quenching head (38) and together with said quenching head serving to define a path of travel for the tubular film;

means (80) intermediate said quenching head (38) and said nip rolls (72, 72') to assist in flattening the tubular film before passing between said nip rolls, and

means (120) for forming at least one gusset or pleat in said tubular film after quenching of same and prior to entry thereof between said nip rolls (72, 72').

10. Apparatus according to claim 11 or 12 wherein said gusset forming means (120) includes freely rotatable gusset forming wheels (122) located so as to be engaged tangentially and rotated by said film (F) as it moves along the path of travel whereby to form a pair of oppositely arranged inwardly directed gusset defining creases in the film, and support means (124) for said wheels which are adjustable to vary the locations of said wheels to accommodate a variety of tubing sizes and sizes of gussets.

11. Apparatus according to claim 9 or 10 wherein opposed pairs of said gusset forming wheels (122) are provided, each pair being located for tangential engagement and rotation by the moving film during operation, the wheels of each pair being mounted such that their rotation axes are inclined toward each other so that peripheral portions of each pair of wheels come into close juxtaposition with each other in the region of contact with the film (F).

12. Apparatus according to claim 10 or 11 wherein the support means (124) includes an arm (128) for supporting each pair of said wheels (122), and adjustable bracket means (124) to allow: (a) the angular position of each arm to be varied in a vertical plane and/or (b) each arm to be moved longitudinally thereof to move said wheel pairs toward or away from each other to vary the distance therebetween to accommodate differing sizes of tubular film.

13. Apparatus for quenching a semi-molten film of plastics material which has been extruded from an extrusion die (12) and which is moving along a path of travel optionally according to any of claims 1-12 including cooling means (21) for the molten film having means for supplying a flow of cooling liquid, c h a - r a c t e r i s e d  by means (50) for aerating the cooling liquid and means (40) for bringing the aerated liquid into contact with a surface of the film to quench the same.

14. Apparatus according to claim 13 wherein said means (40) for bringing the aerated liquid includes means (40) for directing a uniform curtain of the aerated liquid onto the surface of the film (F).

15. Apparatus according to claim 13 or 14 for quenching tubular film passing downwardly along a vertical path of travel wherein the means (40) for directing the curtain of liquid includes a conical wall (40) which, in use, surrounds the path of travel and directs said curtain of aerated liquid downwardly and radially inwardly against said film around the entire circumference thereof and, in use, contacts said film along a line (T) spaced below said conical wall (40) by a distance generally inversely proportional to the diameter of the tubular film.

16. Apparatus for quenching an extruded semi-molten tubular film of plastic material optionally according to any of claims 1-15 including:

a quenching head (38) for supplying a flow of coolant against the film surface to cool the same;

a pair of nip rolls (72, 72') located below and spaced from said quenching head and together with said quenching head serving to define a path of travel for the film;

means (74) to drive said nip rolls at preseleted speeds,

a pair of transition plates (80) located between said quenching head (38) and said nip rolls (72, 72') said plates being disposed to opposite sides of the path of travel and converging toward one another in the downward direction and define elongated gap between lower edge portions (80') of said plates adjacent said nip rolls (72, 72') and parallel thereto;

first adjustment means (90) to vary the included angle between said plates (80); and

second adjustment means (82) to vary the gap between said lower edge portions (80') of said plates (80).

17. Apparatus according to claim 16 wherein said first adjustment means (90) includes cam surfaces (92) on each of said plates (80), and a vertically adjustable means (94, 96, 98) having means (94) engaging and movable along said cam surface such that a change in the vertical position of said adjustable means (94, 96, 98) causes a change in the included angle between said plates (80).

18. Apparatus according to claim 17 wherein said means (94) engaging said cam surfaces (92) comprise rollers (94) and wherein said vertically adjustable means (94, 96, 98) comprises a screw-threaded member (98) and wherein said plates (80) are pivotally supported for rotation about spaced axes (88) generally parallel to said nip rolls (72, 72'), such axes being located closely adjacent said lower edge portions (80') of the respective plates and wherein said second adjustment means (82) includes two pairs of slide blocks (84), each such pair being located to an associated side of said plates (80) and each side block being pivotally (at 88) connected to its associated plate to support the same at said axis (88), and means (86) for mounting and moving said blocks of each pair toward or away from each other to vary the width of the gap between said lower edges (80') of said plates (80) and/or to bring said gap into alignment with the nip between said nip rolls (72, 72').

19. The method of extruding and quenching semi-molten plastic film (F) comprising:

- extruding a semi-molten plastic film and passing the semi-molten film along a path of travel;
- directing a flow of cooling liquid such that it flows freely downwardly along a wall (40) spaced from and inclined at an acute angle to said path of travel such that a curtain of the cooling liquid after leaving said wall tends to follow the same course and converges toward the moving film and gently makes contact therewith at a selected region spaced along the path of travel from said wall.

20. The method of claim 19 wherein the curtain of cooling liquid converges toward said film (F) at an angle such that a slight negative pressure appears between said wall (40) and the film, such negative pressure assisting in stabilizing the film.

21. The method of claim 19 or 20 wherein said semi-molten plastic film (F) is in the form of a tube, the interior of which is slightly pressurized, said wall (40) being of a generally conical shape, said flow of cooling liquid being directed along and around the entire conically shaped wall surface (40) to entirely surround the tubular film with such flow forming said curtain of cooling liquid after leaving said wall, such curtain completely surrounding the tubular film and converging inwardly toward the same and meeting such film and thereafter flowing downwardly over the

28

surface of same to rapidly quench such film.

22. The method of claim 19, 20 or 21 further including the step of aerating the cooling liquid that is directed toward the semi-molten film (F).

23. A method for quenching a semi-molten film (F) of thermoplastic film optionally according to any of claims 19-22, including extruding such film from an extrusion die (12) and passing same along a path of travel, supplying a flow of cooling liquid to contact and cool such film, c h a r a c t e r i s e d by the steps of aerating the cooling liquid and bringing the aerated liquid into contact with a surface of the film to quench the same.

24. The method according to claim 23 wherein said step of bringing the aerated liquid into contact with the film surface comprises directing a uniform curtain of the aerated liquid onto said film surface.

25. The method of claim 24 c h a r a c t e r i s e d by passing the cooling liquid over a porous member (54) through which pressurized air is supplied to cause the pressurized air to pass as bubbles into the cooling liquid prior to being directed onto the surface of the film.

26. The method claim 24 or 25 wherein the curtain of aerated liquid is directed onto the film surface at an acute angle, the main component of the liquid movement being in the direction of the film movement.

27. The method of any of claims 24-26 where the semi-molten plastic film is in the form of a tube, the interior of which is slightly pressurized, said aerated cooling liquid being caused to flow and surround the tubular film and to be directed as unbroken curtain completely surrounding the tubular film toward the latter to contact same and rapidly quench the film.

FIG. I

FIG. 2

FIG. 3

FIG. 4

44

44

VI

58

42

38

54

52

48

46

56

**FIG. 5**

46 48 52 54

F

A

38

42

39

58

50

56

59

40

**FIG. 6**

A

FIG. 7

FIG. 8

FIG. 9

FIG. 10

FIG. II

FIG. 12

FIG. 13

122

122

130

125

FIG. 14

# EUROPEAN SEARCH REPORT

European Patent Office

0091415

Application number

## DOCUMENTS CONSIDERED TO BE RELEVANT

EP 83850088.2

| Category | Citation of document with indication, where appropriate, of relevant passages | Relevant to claim | CLASSIFICATION OF THE APPLICATION (Int. Cl. ³) |
|---|---|---|---|
| X | US - A - 3 207 823 (GLYDE) <br> * Totality * <br> -- | 1,2,4, 7,11, 15,16, 19-21 | B 29 D 7/02 |
| X | DE - A - 1 504 521 (THE METAL BOX) <br> * Totality * <br> -- | 1,2,4, 7,11, 15,16, 19-21 | |
| X | US - A - 3 377 413 (JANSSON) <br> * Fig. 1,3; column 2, lines 24-70; column 3, lines 1-28; claims * <br> -- | 1,2,4, 7,11, 15,16, 19-21 | |
| A | US - A - 3 355 770 (AUGUSTIN) <br> * Fig. 1,2; column 3, lines 17-65 * <br> -- | 7,9,16 | |
| | | | TECHNICAL FIELDS SEARCHED (Int. Cl. ³) |
| A | DE - B - 1 504 064 (BRITISH VISQUEEN LTD) <br> * Fig.; column 2, lines 16-68; column 3, lines 1-22 * <br> -- | 7,9,16 | B 29 D 7/00 |
| A | DE - B - 1 479 838 (WINDMÖLLER & HÖLSCHER) <br> * Totality * <br> -- | 8,10- 12 | |
| A | CH - A - 288 812 (SIDAC) <br> * Totality * <br> -- | 7,8 | |

The present search report has been drawn up for all claims

| Place of search | Date of completion of the search | Examiner |
|---|---|---|
| VIENNA | 06-07-1983 | MAYER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

| Category | Citation of document with indication, where appropriate, of relevant passages | Relevant to claim |
|----------|-------------------------------------------------------------------------------|-------------------|
| A | US - A - 3 821 339 (JOHNSON)<br>* Totality * | |
| A | US - A - 3 822 333 (HIROSHI HARUTA)<br>* Totality * | |
| A | US - A - 3 886 243 (UEMURA)<br>* Totality * | |

## DOCUMENTS CONSIDERED TO BE RELEVANT

**CLASSIFICATION OF THE APPLICATION (Int Cl.)**

**TECHNICAL FIELDS SEARCHED (Int. Cl.³)**